# EUROPEAN PATENT APPLICATION

(11) **EP 3 770 841 A1**
(43) Date of publication of application: **27.01.2021**
(21) Application number: 18910717.0
(22) Date of filing: 18.09.2018
(51) Int. Cl.: G06Q 30/02

(54) **DEMAND PREDICTION SYSTEM AND METHOD**

(30) Priority: 22.03.2018 JP 2018055391
(71) Applicant: Hitachi, Ltd., Tokyo 100-8280 (JP)
(72) Inventor: YAMASHIRO, Masao, Tokyo 100-8280 (JP); OTSUKA, Rieko, Tokyo 100-8280 (JP); AOKI, Chisako, Tokyo 100-8280 (JP)
(74) Representative: Mewburn Ellis LLP
(86) International application number: PCT/JP2018/034445
(87) International publication number: WO 2019/181009

(57) **Abstract**

The future demand can be forecasted with high accuracy even without the pre-registration of an event schedule. Thus, a demand forecast system performs, for each of a plurality of targets, processes of creating a reference value based on actual demand data indicating a past time-series actual demand value, searching for one or more actual demand values in which a difference between the actual demand value and the reference value exceeds a threshold, and creating event data in which one or more periods according to the one or more actual demand values that were found are used as the one or more time periods of event occurrence. This system receives a designation of one target among the plurality of targets and a future time, and performs an event forecast of the designated target, which is a forecast of whether an event will occur at the future time based on event data corresponding to the designated target and, if an event will occur, an event effect as an influence that the event will have on the actual demand value. This system performs a demand forecast, which is a forecast of a demand at the future time based on a result of the event forecast.

## Description

### [TECHNICAL FIELD]

The present invention generally relates to a technology for forecasting future demands.

### [BACKGROUND ART]

Events as typified by concerts and festivals are known to have a major effect on the number of users (demand) of transportation facilities primarily in a period of several hours to several days. If an event that will take place in the future is known, the forecast accuracy can be improved by forecasting the demand upon giving consideration to the effect of that event. For example, the following methods have been proposed as a demand forecast system.

### [CITATION LIST]

### [PATENT LITERATURE]

[PTL 1] Japanese Unexamined Patent Application Publication No. 2006-268529
[PTL 2] Japanese Unexamined Patent Application Publication No. 2010-231605

### [SUMMARY OF INVENTION]

### [TECHNICAL PROBLEM]

PTL 1 registers the effect (feature model) of past events and the schedule of events that will take place in the future, and forecasts the demand at the time of the event based on the foregoing registered information. Nevertheless, because there are countless events to be held in major cities when including both small and large events, the cost (burden) of registration work for registering each and every event is considerable.

Meanwhile, PTL 2 determines whether an event has occurred from the time-series pattern of that day even when the schedule of events has not been registered. In order to identify an event that has occurred and forecast the demand accurately, the time-series pattern at the time of the event needs to be defined for as many events that may occur. Consequently, the cost of registration work is considerable as with PTL 1. Moreover, with PTL 2, because it is necessary to use the time-series data of that day, it is not possible to forecast the demand in the future (for example, several weeks to several months in the future).

Thus, an object of the present invention is to forecast the demand in the future (for example, several weeks to several months in the future) with high accuracy even without any pre-registration of the event schedule.

### [SOLUTION TO PROBLEM]

A demand forecast system comprising an event data creation unit and a demand forecast unit is configured. The event data creation unit performs, for each of a plurality of targets, processes of creating a reference value based on actual demand data indicating a past time-series actual demand value, searching for one or more actual demand values in which a difference between the actual demand value and the reference value exceeds a threshold, and creating event data in which one or more periods according to the one or more actual demand values that were found are used as the one or more time periods of event occurrence. The demand forecast unit receives a designation of one target among the plurality of targets and a future time, and performs an event forecast of the designated target, which is a forecast of whether an event will occur at the future time based on event data corresponding to the designated target and, if an event will occur, an event effect as an influence that the event will have on the actual demand value. The demand forecast unit performs a demand forecast, which is a forecast of a demand at the future time based on a result of the event forecast, and outputs demand result information representing a demand that has been forecasted as a result of the demand forecast.

### [ADVANTAGEOUS EFFECTS OF INVENTION]

It is possible to forecast the future demand with high accuracy without any pre-registration of the event schedule.

### [BRIEF DESCRIPTION OF DRAWINGS]

[Fig. 1]

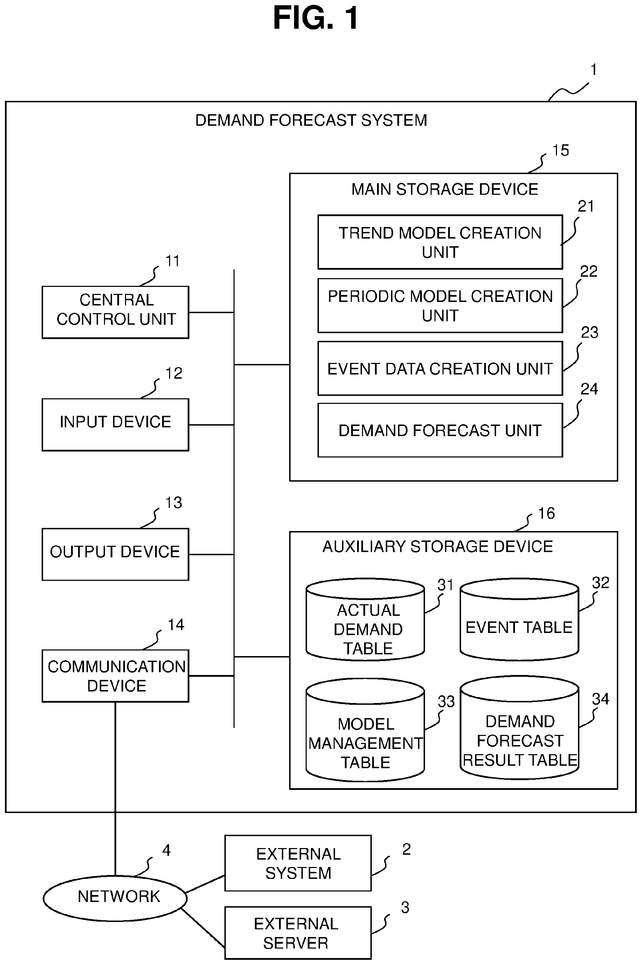

   Fig. 1 is a diagram explaining the configuration of the demand forecast device according to Embodiment 1.
[Fig. 2]

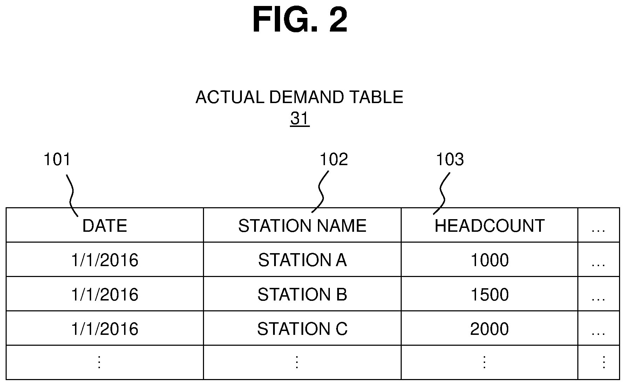

   Fig. 2 is a diagram showing an example of the actual demand data according to Embodiment 1.
[Fig. 3]

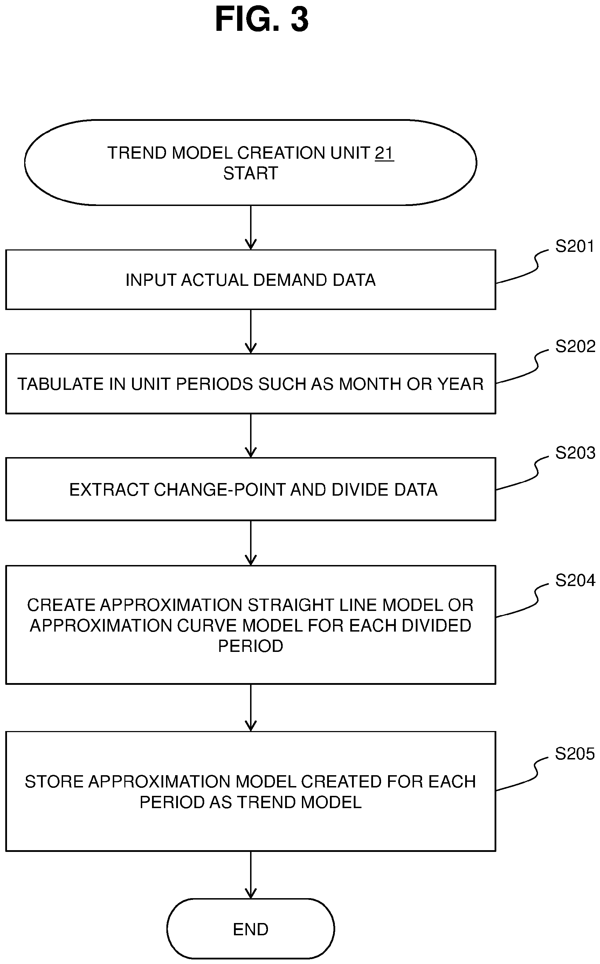

   Fig. 3 is a flowchart of the trend model creation routine according to Embodiment 1.
[Fig. 4]

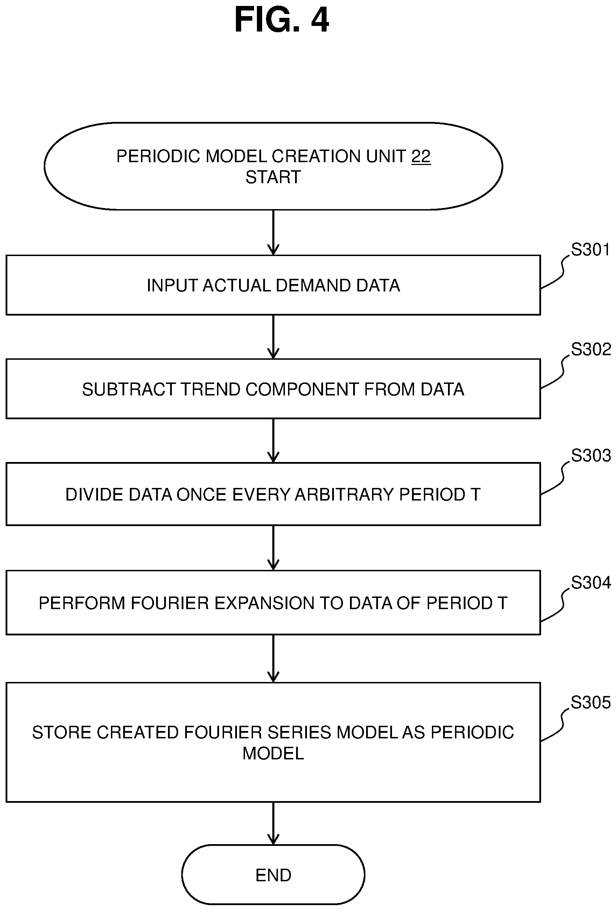

   Fig. 4 is a flowchart of the periodic model creation routine according to Embodiment 1.
[Fig. 5(A)]

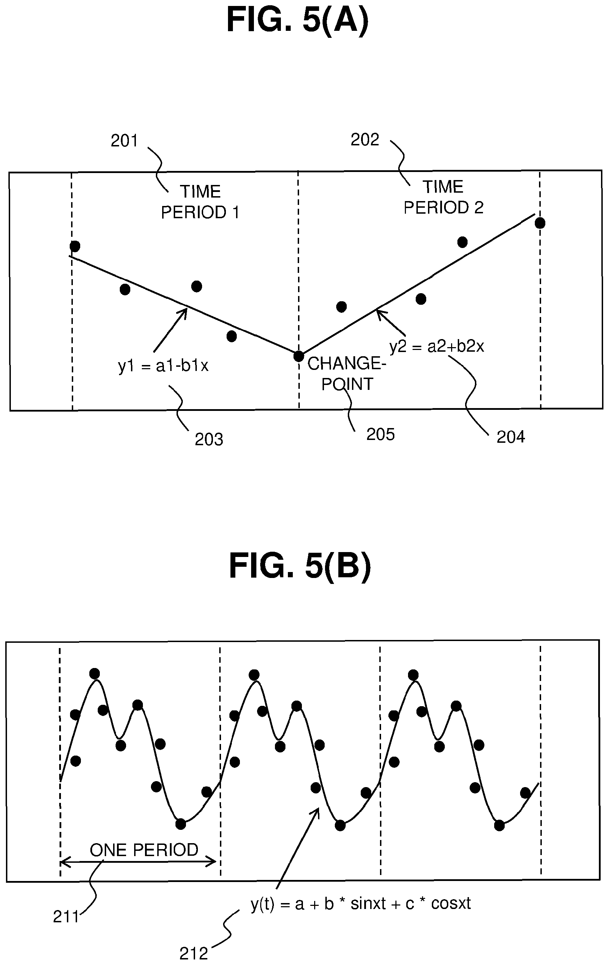

   Fig. 5(A) is a diagram showing an image of the trend model according to Embodiment 1.
[Fig. 5(B)]
   Fig. 5(B) is a diagram showing an image of the periodic model according to Embodiment 1.
[Fig. 6]

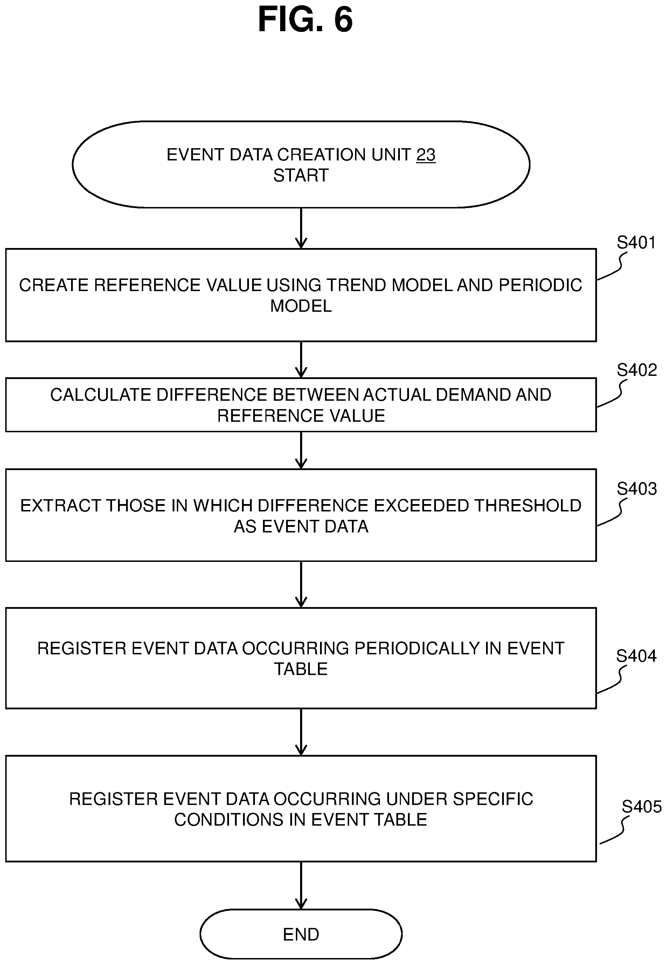

   Fig. 6 is a flowchart of the event data creation routine according to Embodiment 1.
[Fig. 7(A)]

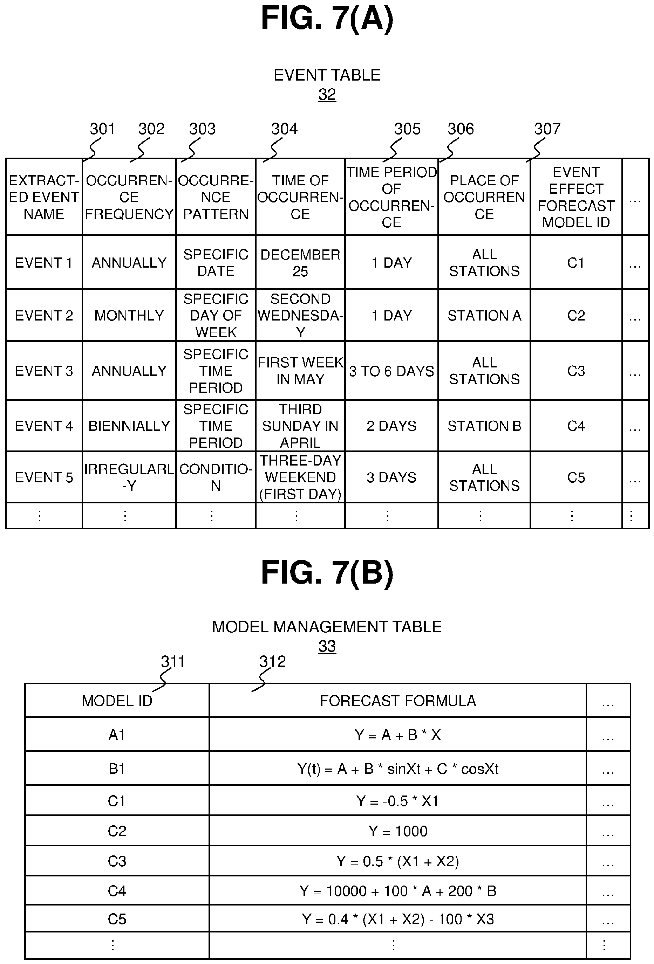

   Fig. 7(A) is a diagram showing an example of the event table according to Embodiment 1.
[Fig. 7(B)]
   Fig. 7(B) is a diagram showing an example of the demand forecast model according to Embodiment 1.
[Fig. 8]

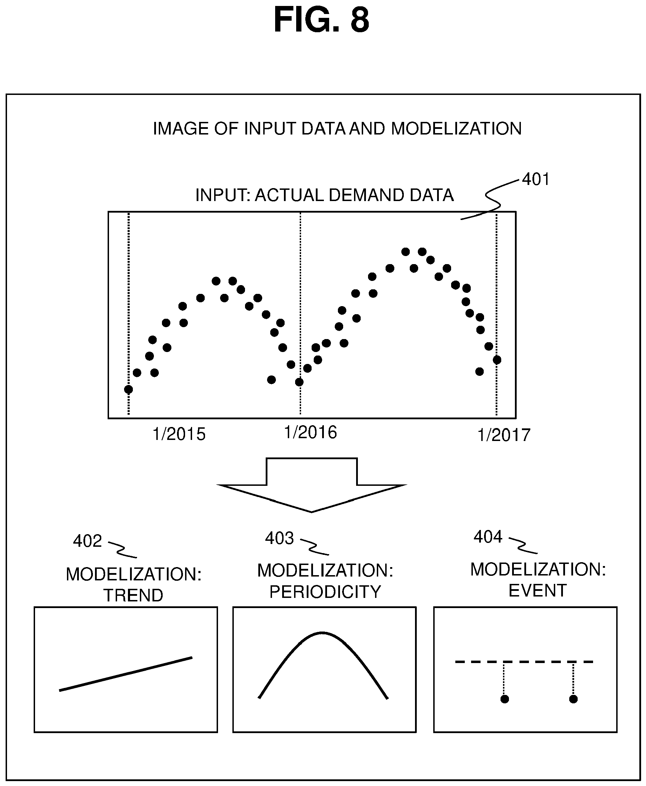

   Fig. 8 is an image diagram of the input data and modelization according to Embodiment 1.
[Fig. 9]

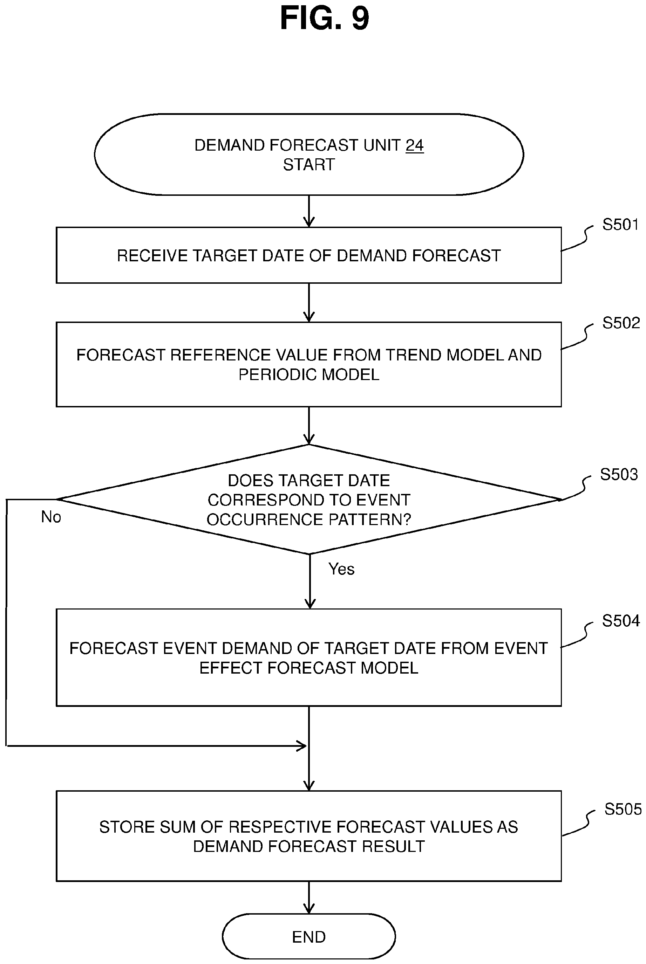

   Fig. 9 is a flowchart of the demand forecast routine according to Embodiment 1.
[Fig. 10]

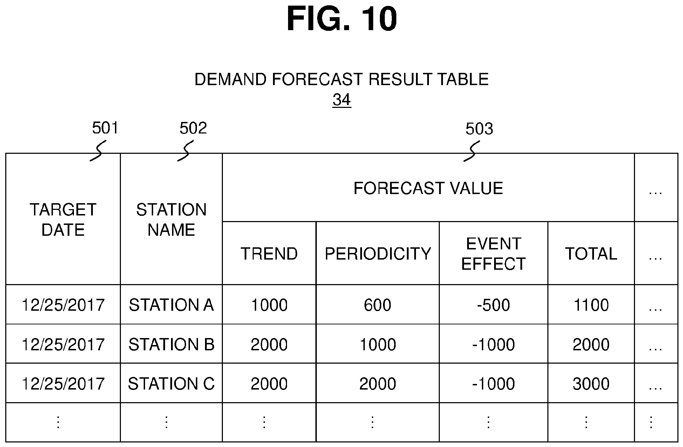

   Fig. 10 is a diagram showing an example of the demand forecast result according to Embodiment 1.
[Fig. 11]

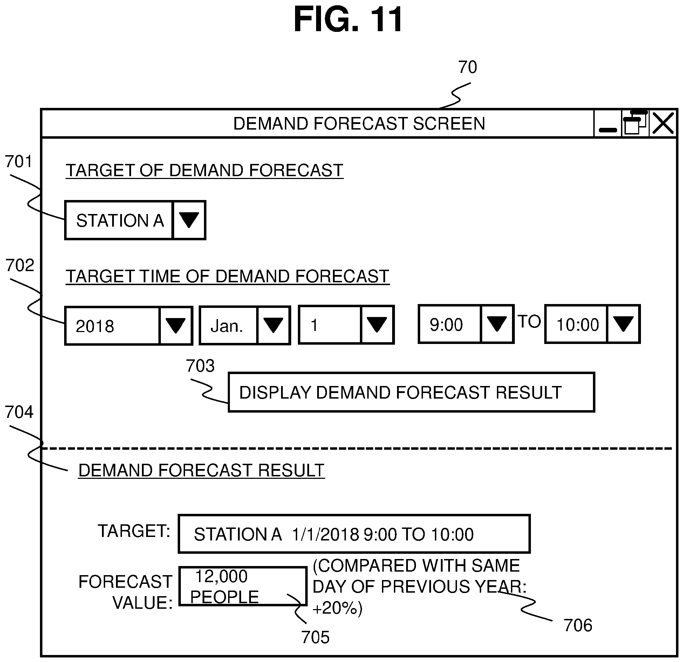

   Fig. 11 is a diagram showing a first example of the demand forecast screen according to Embodiment 1.
[Fig. 12]

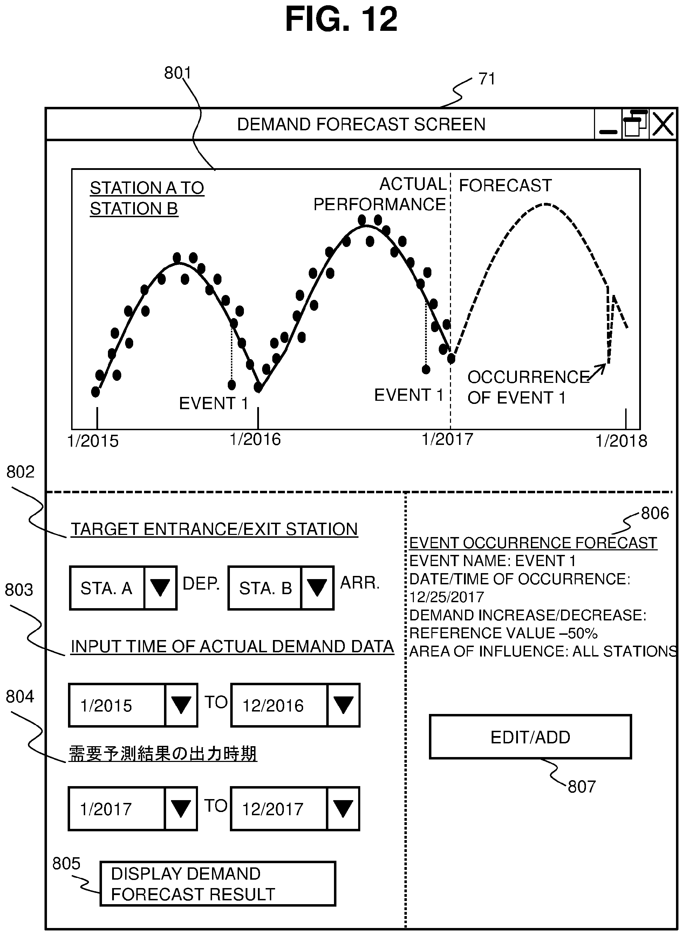

   Fig. 12 is a diagram showing a second example of the demand forecast screen according to Embodiment 1.
[Fig. 13(A)]

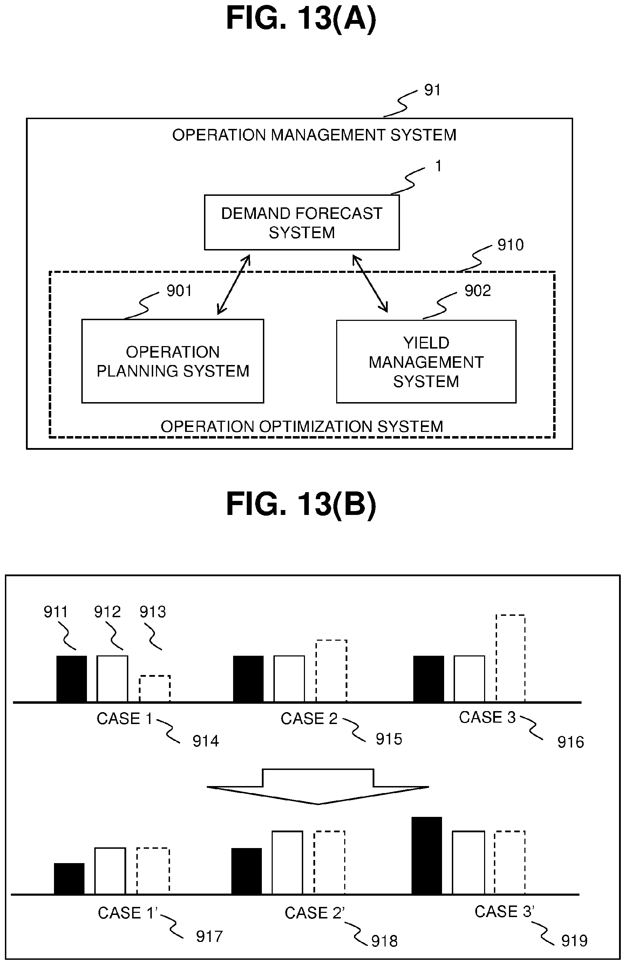

   Fig. 13(A) is a diagram showing an example of the operation planning system according to Embodiment 2.
[Fig. 13(B)]
   Fig. 13(B) is a diagram showing an example of the operation plan using the operation optimization system.
[Fig. 14(A)]

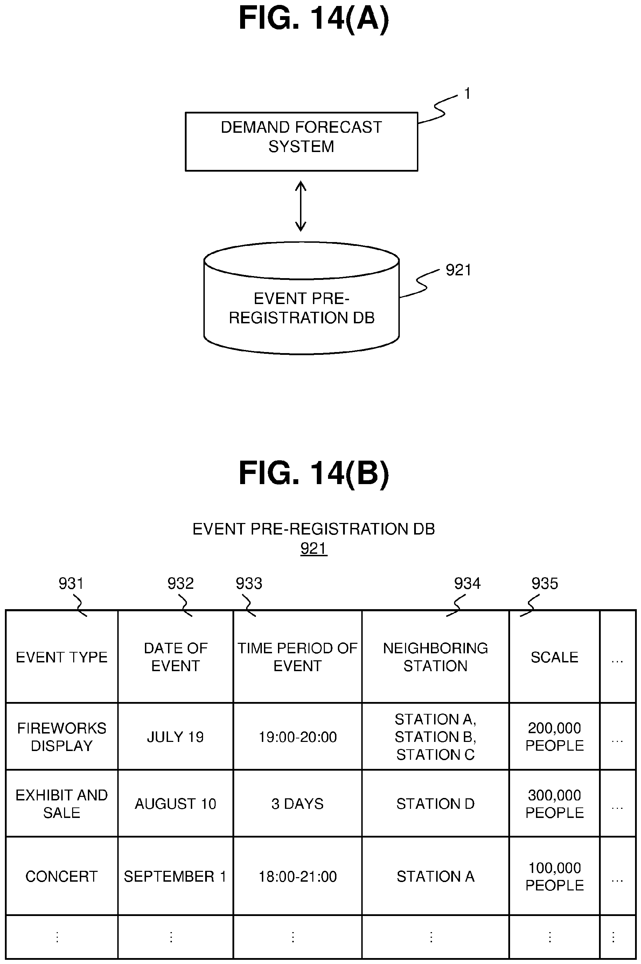

   Fig. 14(A) is a diagram showing an example of connecting the demand forecast system and the event pre-registration DB according to Embodiment 3.
[Fig. 14(B)]
   Fig. 14(B) is a diagram showing an example of the event pre-registration DB.

### [DESCRIPTION OF EMBODIMENTS]

Several embodiments of the present invention are now explained with reference to the appended drawings. In the following embodiments, the demand forecast of station users is taken as an example. Nevertheless, the applicable scope of the present invention is not limited to stations and, for example, the present invention can also be suitably applied to the supply and demand forecast (inventory control) of logistics and the supply and demand forecast of equipment rental.

### [EMBODIMENT 1]

### (Demand forecast system)

The configuration of a demand forecast system 1 according to Embodiment 1 is now explained with reference to Fig. 1.

The demand forecast system 1 can be realized, for example, using a general computer. The demand forecast system 1 includes a central control unit 11, an input device (for example, keyboard and mouse) 12, an output device (for example, display) 13, a communication device 14, a main storage device 15, and an auxiliary storage device 16. These devices 11 to 16 are mutually connected via a bus. Note that the communication device 14 may be one or more communication interface devices. The one or more communication interface devices may be one or more homogeneous communication interface devices (for example, one or more NICs (Network Interface Card)) or two or more heterogeneous communication interface devices (for example, NIC and HBA (Host Bus Adapter)). The main storage device 15 may be one or more memories. At least one among the one or more memories may be a nonvolatile memory. The auxiliary storage device 16 may be one or more nonvolatile storage devices. Each of the nonvolatile storage devices may be an HDD (Hard Disk Drive) or an SSD (Solid State Drive). The central control unit 11 may be one or more processors (for example, CPU (Central Processing Unit)).

As a result of one or more computer programs in the main storage device 15 being executed by the central control unit 11, functions such as a trend model creation unit 21, a periodic model creation unit 22, an event data creation unit 23, and a demand forecast unit 24 are realized. In the following explanation, let it be assumed that any "oo unit" is realized by the central control unit 11 reading one or more programs from the auxiliary storage device 16 and loading such one or more programs into the main storage device 15, and executing such one or more programs.

The auxiliary storage device 16 stores an actual demand table 31, an event table 32, a model management table 33, and a demand forecast result table 34. Note that, in the following explanation, the configuration of each table is merely an example, and one table may be divided into two or more tables, and all or a part of two or more tables may be one table. Moreover, a data structure other than a table may also be adopted.

The demand forecast system 1 can communicate with an external system 2 and an external server 3 via a network 4. Here, the external system 2 is, for example, the operation optimization system 910 (refer to Fig. 13(A)) in Embodiment 2. Operation can be optimized according to the demand forecast result. The external server 3 is, for example, a human flow tabulation server, and the human flow tabulation history stored in the human flow tabulation server can be used as the actual demand table 31 via a network. Moreover, calendar information may also be acquired from the external server 3 as needed.

### (Actual demand table)

The actual demand table 31 is an aggregate of the actual demand data as the input data of the demand forecast system 1. The actual demand table 31 is now explained with reference to Fig. 2.

The actual demand table 31 is an aggregate of actual demand data indicating a past time-series headcount (example of actual demand value) for each of a plurality of stations (example of plurality of targets). For example, as the respective records configuring the actual demand table 31, there are, for example, a date column 101, a station name column 102 and a headcount column 103. The date column 101 stores the date, the station name column 102 stores the station name, and the headcount column 103 stores the headcount (number of station users) linked to the date and the station.

Note that, in Fig. 2, while an example of tabulating the data on a daily basis is shown, the actual demand data is not limited to tabulation on a daily basis. For example, the actual demand data in the actual demand table 31 may be tabulated within less than a day such as on an hourly basis, or may be tabulated in multiple days such as on a weekly basis.

In this embodiment, the demand can be forecasted according to the granularity of the tabulation unit of the actual demand data as the input data. The input of the actual demand table 31 can be made, for example, by connecting to the external system 2 via the network 4. As a specific example of the actual demand table 31, this may be the result of tabulating the number of persons (headcount) that passes through the passage in the station obtained from a laser sensor. The actual demand table 31 is not limited to the result of the headcount tabulation based on a sensor, and ticket gate history information may also be used. Moreover, without limitation to the example of Fig. 2, various types of input such as the sales performance of a product, power consumption history, and access history to a site may be used.

### (Trend model creation unit)

The routine of trend model creation is now explained with reference to Fig. 3. Note that the trend model creation shown in Fig. 3 is performed for each actual demand data of the station.

The term "trend" as used in this embodiment is the trend of the demand fluctuation from a long-term perspective. For example, relative to the actual demand data tabulated on a daily basis, by performing tabulation on an annual basis from a long-term perspective, the annual demand fluctuation can be treated as the "trend".

In step S201, the trend model creation unit 21 acquires the actual demand table 31. In step S202, the trend model creation unit 21 tabulates the actual demand table 31 on a long-term basis such as on a monthly or annual basis.

Subsequently, in step S203, the trend model creation unit 21 extracts the change-point, and divides the data for each time period. The term "change-point" in step S203 is the time (point of tabulation) that the trend changed considerably. For example, in the results that were tabulated on an annual basis, after an annual demand increase of 10% continued for 5 years, if the annual demand decreased by 10% for the next 5 years up to the present day, the change-point will be 5 years ago. In the foregoing case, data will be divided into a period that is 10 years ago to 5 years ago and a period that is 5 years ago to present day.

In step S204, the trend model creation unit 21 creates an approximation straight line model or an approximation curve model for each divided period. Subsequently, in step S205, the trend model creation unit 21 assigns the model ID with the created model as the trend model, and stores the created model in the model management table 33. A specific image of the trend model will be explained later.

### (Periodic model creation unit)

The routine of periodic model creation is now explained with reference to Fig. 4. Note that periodic model creation shown in Fig. 4 is performed for each actual demand data of the station.

The term "periodic (periodicity)" as used in this embodiment is, for example, a demand fluctuation on a seasonal basis, and is a demand fluctuation which is repeated annually such as the demand increasing in the summer and the demand decreasing in the winter.

In step S301, the periodic model creation unit 22 acquires the actual demand data. In step S302, the periodic model creation unit 22 subtracts the trend component from the actual demand data. The term "trend component" in step S302 is the value that is calculated based on the trend model created by the trend model creation unit 21. For example, for a trend model in which the demand increases at an annual rate of 10%, by subtracting such increase rate from the actual demand data, it is possible to create data having stationarity in which the trend has been excluded therefrom.

Subsequently, in step S303, the periodic model creation unit 22 divides the data obtained by subtracting the trend component from the actual demand data in an arbitrary period T. For example, when the periodic model creation unit 22 is to create a seasonal periodic model, the periodic model creation unit 22 divides the data with one year being one period.

In step S304, the periodic model creation unit 22 performs Fourier expansion to the data of period T, and creates a Fourier series model. Subsequently, in step S305, the periodic model creation unit 22 assigns the model ID with the created Fourier series model as the periodic model, and stores the created Fourier series model in the model management table 33.

While this embodiment explained a case of using Fourier expansion in the creation of the periodic model, the creation of the periodic model is not limited to Fourier expansion, and, for example, an autoregression model or a moving average model may also be used. A specific image of the periodic model will be explained later.

### (Image of trend model)

A specific image of the trend model is now explained with reference to Fig. 5(A).

In Fig. 5(A), the respective dots on the screen are the actual demand data tabulated in step S202 explained above, and the solid line is the value of the model created by the trend model creation unit 21. The data has been divided into time period 1 (201) and time period 2 (202), and two trend models y1 (203) and y2 (204) have been created. The reason why the data has been divided into two is because the trend changed considerably at the change-point (205), and, for example, a point in which the difference with the preceding tabulation value deviates considerably from the previous difference is extracted as the change-point. Note that the combination of time period 1 and time period 2 is an example of the first time period.

### (Image of periodic model)

A specific image of the periodic model is now explained with reference to Fig. 5(B).

In Fig. 5(B), the respective dots on the screen are the data obtained by subtracting the trend component from the actual demand table 31 in step S303 explained above, and the solid line is the value of the model created by the periodic model creation unit 22. The data has been divided for every one period (211), and a periodic model y(t) (212) has been created. Here, the one period is, for example, a period based on an annual basis. Note that the one period is an example of the second time period.

### (Event data creation unit)

The routine of event data creation is now explained with reference to Fig. 6. Note that the event data creation shown in Fig. 6 is performed for each actual demand data of the station.

The term "event" as used in this embodiment is a concert, conference, bad weather, consecutive holidays or any other event that induces a demand that is unusual, and does not refer to a certain specific event. In the following explanation, one factor of a demand fluctuation is explained as an event.

In step S401, the event data creation unit 23 creates a reference value by using the trend model and the periodic model. The term "reference value" as used in this embodiment is the value of the demand that is estimated when there is no occurrence of an event. An example of the reference value is now explained using specific numerical values. For example, let it be assumed that the result of calculating the average demand value of a year based on the trend model was 100. Next, let it be assumed that the demand fluctuation of each season was estimated by using the periodic model, and the demand in summer increased by 30% in comparison to the annual average and the demand in winter decreased by 30% in comparison to the annual average. Consequently, for example, the reference value of August will be 130 as a result of adding the periodicity of 30% (+30) to the trend of 100. The reference value is created according to the granularity of the demand forecast (for example, on a daily basis).

In step S402, the event data creation unit 23 compares the actual demand table 31 and the reference value. In step S403, the event data creation unit 23 identifies, among the time-series actual demand values (headcount in this embodiment) configuring the actual demand data, an actual demand value in which the difference between such actual demand value and the reference value created in step S401 exceeds a threshold, and creates an event data set for each identified actual demand value. For each event data set, the value obtained by subtracting the reference value from the actual demand value becomes the event effect. For example, the actual demand data and the reference value are compared on a daily basis, and an event data set is generated for each actual demand value in which the difference thereof is ±30% or more of the reference value. The threshold of ±30% is merely an example, and only a positive value may be used as the threshold, or the threshold may be a fixed value such as 1000 people rather than a relative value such as a percentage. Moreover, the threshold may be changed depending on the season or year. Note that the term "data set" is a block of one logical electronic data viewed from a program such as an application program and, for example, may be one among a record, a file, a key value pair or a tuple.

In step S404, the event data creation unit 23 modelizes an event effect according to the occurrence frequency, occurrence pattern, and time of occurrence of an event that is periodically occurring on or at a specific date, day of the week or time, stores the event data set in the event table 32, and stores the event effect forecast model in the model management table 33. Moreover, in step S405, the event data creation unit 23 modelizes the effect effect according to the conditions of occurrence for an event that is occurring under specific conditions, stores the event data set in the event table 32, and stores the event effect forecast model in the model management table 33. In this embodiment, while step S404 and step S405 are processed serially, they may also be processed independently, and steps S404 and S405 may also be processed in parallel or only one of either step S404 or step S405 may be processed. Details of the event table and the model management table will be explained later.

### (Event table)

The event table 32 is now explained with reference to Fig. 7(A).

The respective records configuring the event table 32 correspond to the record. For each of the plurality of stations, event data including one or more event data sets exists. The term "station" as used herein is not limited to one station and, for example, two or more stations (such as "all stations") may be referred to as one "station".

As the respective records configuring the event table 32, there are, for example, an extracted event name column 301, an occurrence frequency column 302, an occurrence pattern column 303, a time of occurrence column 304, a time period of occurrence column 305, a place of occurrence column 306, and an event effect forecast model ID column 307. In the event table 32, the extracted event name column 301 stores the event name, the occurrence frequency column 302 stores the estimated event occurrence frequency, the occurrence pattern column 303 stores the occurrence pattern of the event, the time of occurrence column 304 stores the time of occurrence of the event, the time period of occurrence column 305 stores the running days of the event, the place of occurrence column 306 stores the place of occurrence of the event, and the event effect forecast model ID column 307 stores the model ID. Note that the term "occurrence pattern" may be a pattern which means that an event periodically occurs on a specific day of the week, or a pattern which means that an event occurs only when a specific condition such as "condition" is satisfied. Moreover, the term "time" means that, in addition to the length of time, at least one of either the start time or end time has been designated. Meanwhile, the term "time period" means that, while the length of time has been designated, neither the start time nor the end time has been designated. The "place of occurrence" is an example of a target such as a station. The "event effect forecast model" is a model for forecasting an event effect. The "model ID" is used for identifying the model (for example, forecast formula) in the model management table 33 explained later.

The event table is now explained in detail by using one specific case example.

Event 1 (event having the event name of "event 1") is an event that occurs on a specific date at a frequency of every year. More specifically, event 1 is an event in which a demand fluctuation occurs in all stations in a one-day period on December 25, and the ID of the event effect forecast model of event 1 is "C1". Event 1 is an event that was extracted in step S404 because the actual demand value exceeded the threshold in comparison to normal times in all stations on December 25 of every year. Because an event is automatically extracted, the extracted event name column 301 stores serial numbers such as event 1, event 2, etc. In this embodiment, while the event name is indicated on the assumption of being automatically assigned, it is also possible to provide a management screen and have the user arbitrarily change the event name. For example, because event 1 is an event that occurs on December 25 of each year, by changing the event name to "Christmas", the user can manage the event in a more easy-to-understand manner. The occurrence pattern of the event may be a periodic occurrence such as on a specific day of every year as with event 1, or a condition such as consecutive holidays that occur at a random frequency as with event 5 (for example, three-day weekend). Event 5 is an event that was extracted in step S405 because the demand exceeded the threshold in comparison to normal times in all stations during a three-day weekend that occurs randomly. When consecutive holidays are used as the condition, calendar information (national holiday information) will be required for the event extraction. Here, the calendar information may be acquired from the external server 3, or stored in the auxiliary storage device 16 and then read.

### (Model management table)

The model management table 33 is now explained with reference to Fig. 7(B).

The model management table 33 stores various models such as the trend model, the periodic model and the event effect forecast model. Specifically, for example, as the respective records configuring the model management table 33, there are a model ID column 311 and a forecast formula column 312. The model ID column 311 stores the ID for identifying the model, and the forecast formula column 312 stores the formula as the model corresponding to the ID. The forecast formula column 312 stores, as a constant or mathematical formula, models such as the trend model, the periodic model, and the event effect forecast model that were created in this embodiment. The term "constant" in the model management table 33 is the event effect forecast model in which the same demand always arises in a certain event. For example, when it is understood that the number of station users on January 1 exceeds the annual threshold and is roughly a reference value of +30,000 people, the event effect forecast model of January 1 may be a constant of 30000. The term "mathematical formula" is a forecast model such as a simple linear regression model or a multiple regression model. For example, with the forecast value of the trend model as X1, the forecast value of the periodic model as X2, and the number of days elapsed from the occurrence of the event as X3 (event that continues for multiple days), the forecast formula may be, for example, demand forecast value Y = 0.4 * (X1 + X2) - 100 * X3. With this forecast formula, the modelization is such that the first day of the event has an event effect of an increase of 40% relative to the reference value, and a demand of 100 people decreases for each day that elapses with the first day as the reference. As the explanatory variable of the forecast formula, the external data acquired from the external server 3 may be utilized. Specifically, as the external factors that affect the demand, rainfall probability forecast and forecast temperature may be incorporated as the explanatory variable of the forecast formula. Moreover, other than the weather and climate data, various types of data such as the economic index, SNS (Social Networking Service) information, media information, and tourism statistic survey result may be incorporated into the explanatory variable. The event effect forecast model is created based on the actual demand data as the input data, and the timing of such creation is arbitrary. Consequently, considered may be an operation method of updating the event effect forecast model each time the actual demand data is increased, updating the event effect forecast model at a set timing several times a year, or continuously using the event effect forecast model without updating the same. Moreover, after being created, the event effect forecast model may be manually corrected by the user. Here, the model before correction may be separately stored, or the correction model may be manually managed by adding a correction flag and corrector information thereto.

### (Image of input data and modelization)

A specific image of the input data and modelization is now explained with reference to Fig. 8.

In Fig. 8, an upper graph 401 is the time-series actual demand value that was input, and lower graphs 402 to 404 are the image diagrams of modelization. The input data is the actual demand data of two years from January 2015 to January 2017. On the assumption that a trend model is created from data tabulated on an annual basis, a regression line model of a linear increase as shown in the graph 402 will be created. Moreover, on the assumption that a periodic model is created in an annual cycle, a curve model as shown in the graph 403 will be created. The modelization of an event is determined depending on whether the actual demand data has considerably deviated from the reference value and is occurring with regularity and, for example, specific actual demand data which coincides with the condition shown in the graph 404 is extracted.

### (Demand forecast unit)

The routine of demand forecast is now explained with reference to Fig. 9.

In step S501, the demand forecast unit 24 receives the designation (input) of the target station and future time of the demand forecast. In the following explanation, the station that was designated is referred to as the "designated station", and the future time that was designated is referred to as the "designated time". Here, the term "designated time" is, for example, one day several months in the future, or the time from a certain day to a certain day from the following day onward. The forecast may be performed, for example, for every time unit (for example, one day) configuring the designated time. Moreover, the designated time may also be a detailed time such as "from 10:00 to 11:00 on [month/day/year]". In the foregoing case, the demand forecast is performed for every time granularity that was input.

In step S502, the demand forecast unit 24 forecasts the reference value from the trend model and the periodic model. The calculation method of the reference value is the same as the processing of step S401, and the explanation thereof is omitted. Note that, in this embodiment, the trend model created by the trend model creation unit 21 and the periodic model created by the periodic model creation unit 22 may be stored in the model management table 33 regarding the past time for each station. The demand forecast unit 24 may also forecast the reference value for the designated station based on the trend model and the periodic model corresponding to that designated station.

In step S503, the demand forecast unit 24 determines the possibility of an event occurring at the designated time. Specifically, for example, the demand forecast unit 24 checks whether the day, day of week, month, or holiday belonging to the designated time coincides with the occurrence pattern and time of occurrence of each event indicated by the event data corresponding to the designated station, and, when there is a corresponding event, determines that the target date is a day in which an event will occur. Here, the calendar information may be acquired from the external server 3, or stored in the auxiliary storage device 16.

When the target date is a day in which an event will occur (step S503: Yes), in step S504, the demand forecast unit 24 forecasts the event demand of the target date from the event effect forecast model. The term "event demand" is the demand as a result of being affected by the event. Specifically, for example, the demand forecast unit 24 forecasts the event effect by referring to the forecast formula (forecast model of the model management table 33) corresponding to the event effect forecast model ID corresponding to the corresponding event. More specifically, for example, when the forecast formula is a constant of 30,000, the event effect will be 30,000. In S505, the demand forecast unit 24 stores the sum of the respective forecast values as the demand forecast result. For example, when the trend forecast value (demand forecasted based on the forecasted trend model) is 50,000, the periodic forecast value (demand forecasted based on the forecasted periodic model) is -20,000, and the event effect forecast value is 30,000, the demand forecast unit 24 deems that the demand forecast result is the sum of the above; that is, 60,000. Note that, in the event effect as the forecast value, consideration may also be given to the time period of occurrence corresponding to the corresponding event.

Note that, when the target date is not a day in which an event will occur (step S503: No), the demand forecast unit 24 outputs the reference date that was forecasted in step S502. In step S505, the calculated total becomes the total of the trend forecast value and the periodic forecast value and the reference value.

### (Demand forecast result table)

The demand forecast result table 34 is now explained with reference to Fig. 10.

As the respective records configuring the demand forecast result table 34, there are a target date column 501, a station name column 502 and a forecast value column 503. The target date column 501 stores the target date (in the case of hourly granularity, including hourly information) of the forecast at the designated time, the station name column 502 stores the station name, and the forecast value column 503 stores the demand forecast value such as the three forecast values obtained for the three types of models such as trend, periodicity and event effect, as well as the total value thereof. In Fig. 10, because the forecast of the number of station users is an example of the demand forecast, the demand forecast result table 34 is provided with a station name column. However, for example, when ticket gate history information is used, an entrance station column and an exit station column may be provided. Moreover, in the case of a demand forecast of a retail store, the demand forecast may be performed by providing a store name column of the target store in substitute for the station name column, and the demand forecast may be performed by providing a product name column of the target produce if the demand of a rental product is to be forecasted. The configuration of the demand forecast result table 34 may be in accordance with the configuration of the actual demand data as the input data.

The forecast value is now explained by taking the first record (record of station name "station A") in the demand forecast result table 34 as an example. This record shows the demand forecast result of December 25, 2017, and the "total" of the forecast value is forecasting the number of users of station A. Specifically, the forecast value of trend "1000" implies, for example, that the forecast value of station users based on an annual average (for example, value obtained from the trend model corresponding to "station A") is 1000 people. The forecast value of periodic "600" implies, for example, that the increase in demand of station users in December relative to the annual average (for example, value obtained from the periodic model corresponding to "station A") is 600 people. The forecast value of event effect "-500" implies that an event occurred on the target date and it is forecasted that the number of station users will decrease by 500 people. Consequently, the number of users of station A on December 25, 2017 is forecasted to be 1100 people (= 1000 + 600 + (-500)).

### (System screen)

The demand forecast system 1 provides a screen for the user, such as a railway company, to confirm the demand forecast result. An example of the specific screen is now explained.

### (System screen 1: Demand forecast screen 1)

The demand forecast screen 70 is now explained with reference to Fig. 11. In the following explanation, "UI" is abbreviation of "user interface", and is typically a GUI (Graphical User Interface) component.

The demand forecast screen 70 includes a UI (for example, button) 701 for selecting the target (station) of the demand forecast and a UI (for example, button) 702 for selecting the target time (for example, target date) of the demand forecast. The user can use the screen 70 and designate (select) the station and future time as the targets of the demand forecast. According to the example of Fig. 11, on the demand forecast screen 70, the users of station A on January 1, 2018 from 9:00 to 10:00 have been selected as the target of the demand forecast.

The demand forecast result area 704 is an area where the demand forecast result information (information indicating the demand forecast result) is displayed when the UI (for example, button) 703 for requesting the demand forecast result display is operated. Specifically, for example, when the UI 703 is operated, the demand forecast unit 24 is called, the demand forecast is performed by the called demand forecast unit 24, and the demand forecast value of the target date stored in the demand forecast result table 34 is displayed in the demand forecast result area 704. In the demand forecast result area 704, the total ("12000 people") as the forecast value is displayed on the UI 705. Supplementary information 706, such as information of the comparison with the previous year, may also be displayed in the demand forecast result area 704 so that the user can better understand the total (forecast value) displayed on the UI 705.

### (System screen 2: Demand forecast screen 2)

The demand forecast screen 71 is now explained with reference to Fig. 12.

The demand forecast screen 71 is a modified example of the demand forecast screen 70. The demand forecast screen 71 includes a time-series graph 801 for confirming the actual demand value and the demand forecast value. In the time-series graph 801, the performance values are displayed with dots, the reference value is displayed with a solid line, and the automatically extracted events are displayed together with the event name (text). Moreover, the forecast value is displayed with a broken line, and it is also possible to confirm the occurrence of an event in the future (forecast of occurrence of event 1). The time-series graph 801 may be displayed in response to the operation of the Uls 802 to 805 provided at the lower left part (or any other part) of the screen. The UI 802 is a UI for designating the target entrance/exit station. The UI 803 is a UI for designating the input time as the input range of the actual demand data. The UI 804 is a UI for designating the output time as the output range of the demand forecast result. The UI 805 is a UI (for example, button) for requesting the display of the demand forecast result. What is selected on the demand forecast screen 71 is the a demand forecast from January 2017 to December 2017 of the railway users that enter station A and exit station B by using the actual demand data from January 2015 to December 2016, and the result thereof is the time-series graph 801. The number of events that were automatically extracted is one event, which is displayed on the screen as event 1, and the detailed information thereof is displayed in the event occurrence forecast area 806. Event 1 is an event that occurs in all stations on December 25 of each year, and it is indicated that the demand relative to the reference value is -50%. Moreover, by operating the UI (for example, button) 807, it is possible to perform at least one among editing, addition or deletion of the event information displayed in the event occurrence forecast area 806. While the event name and the forecast model are automatically created by the demand forecast system 1, the user may change the event name and the forecast model to be more appropriate. Moreover, an event that was not automatically extracted may be added by the user (explanation of the event editing/addition screen is omitted).

### [SECOND EMBODIMENT]

Embodiment 2 is now explained. Here, the differences in comparison to Embodiment 1 will be mainly explained, and the explanation of points that are common with Embodiment 1 will be omitted or simplified.

In Embodiment 1, with the actual demand data as the input, it is possible to forecast the demand with high accuracy at a low running cost. As an example of utilizing the demand forecast result, Fig. 13(A) shows an example of an operation management system 91. The operation management system 91 includes a demand forecast system 1, and an operation optimization system 910 as an example of an external system of the demand forecast system 1. The operation optimization system 910 includes an operation planning system 901 and a yield management system 902 which are mutually connected.

The operation planning system 901 can confirm the station users that were forecasted by the demand forecast system 1 (demand forecast result), and, for example, thereby optimize the number of train services to be operated based on the train capacity and the forecasted passenger headcount. More specifically, for example, the operation planning system 901 can plan the number of train services to be operated so that the train occupancy will be around 100%. Moreover, with the operation planning system 901, by inputting the operation plan information into the demand forecast system 1, the demand forecast system 1 can also calculate, for example, the number of station users that will remain in the station as a result of not being able to board the train based on the number of train services to be operated and the train capacity/forecasted passenger headcount.

The yield management system 902 can change, for example, the train fare based on the number of train services to be operated and the train capacity/forecasted passenger headcount. More specifically, for example, the yield management system 902 has a function of being able to arbitrarily change the price of reserved seating of Shinkansen (bullet train) or according to a seasonal demand or an hourly demand.

Fig. 13(B) shows a specific image of the train operation plan using the demand forecast result.

In Fig. 13(B), three types of bar graphs (911 to 913) are indicated for each of the six cases (914 to 919). The three types of bar graphs are, from left to right, a train fare 911, a transportation capacity 912, and a demand forecast 913. The train fare 911 is, for example, the fare required for taking a train from station A to station B. The transportation capacity 912 is, for example, a value obtained by multiplying the number of train services to be operated in one day from station A to station B by the train capacity. The demand forecast 913 is, for example, the number of station users to travel from station A to station B as forecasted by the demand forecast system 1. Cases 1 to 3 (914 to 916) are the initial values of the train fare and the transportation capacity, and cases 1' to 3' (917 to 919) are examples in which the train fare and transportation capacity have been changed by the operation planning system 901 and the yield management system 902 shown in Fig. 13(A). In case 1 (914), because the demand forecast is small relative to the transportation capacity, in case 1' (917) the train fare is lowered to boost demand (model of increasing/decreasing the demand by increasing/decreasing the train fare is separately prepared). In case 2 (915), because the demand is great relative to the transportation capacity, in case 2' (918) the transportation capacity is increased according to the demand forecast (number of train services to be operated is increased). In case 3 (916), because the demand is considerably great relative to the transportation capacity, in case 3' (919) both the transportation capacity and the train fare are increased. As a result of changing the operation plans as described above, it is possible to devise a transportation plan that is beneficial to both the railway company and the railway users. An operation plan that is beneficial for both the railway company and the railway users is, for example, a transportation plan in which the demand (customers who wish to use the railway) and the supply (transportation capacity) coincide, and a transportation plan in which the revenues (train fare × demand - operating cost (transportation capacity)) become maximum.

### [THIRD EMBODIMENT]

Embodiment 3 is now explained. Here, the differences in comparison to Embodiment 1 and Embodiment 2 will be mainly explained, and the explanation of points that are common with Embodiment 1 and Embodiment 2 will be omitted or simplified.

In Embodiment 1 and Embodiment 2, a demand can be forecast by giving consideration to the occurrence of an event even when the event schedule is pre-registered. Nevertheless, there may also be events that are difficult to extract automatically such as an event that occurs randomly during an event, a small event which only exerts influence at a level that does not exceed the threshold, or a major event that is only held once every several years. If the date and time and place of occurrence of these events are known, by pre-registering the event schedule, an even higher accurate demand forecast which gives consideration to the event will be enabled.

Fig. 14(A) shows an example of a system in which an event pre-registration DB (for example, DB system) 921, which is an example of an external system, has been connected to the demand forecast system 1 ("DB" is the abbreviation of "database"). Fig. 14(B) shows the configuration of the event pre-registration DB 921.

As the respective records configuring the event pre-registration DB 921, there are, for example, an event type 931, a date of event 932, a time period of event 933, a neighboring station 934, and a scale 935. As a result of inputting such data into the demand forecast system 1, an event that could not be extracted with the demand forecast system 1 can be supplemented by using the information of the event data DB, and the occurrence of more events can be forecast. Specifically, for example, if an exhibit and sale scheduled for August 10 could not be forecast with the demand forecast system 1 (or in the demand forecast processing in Embodiment 1 and second embodiment), the demand forecast unit 24 refers to the time period of event 933, the neighboring station 934, and the scale 935 in the event pre-registration DB 921, and forecasts the demand that was affected by such event ("exhibit and sale"). More specifically, for example, because it has been registered that 300,000 event guests will use station D in a three-day period from August 10, it is deemed that 100,000 people will use station D per day, and the accuracy of the demand forecast can be improved by adding 100,000 people to the demand forecast result of station D on August 10, 11, and 12.

Moreover, if the event schedule registered in the event pre-registration DB 921 has already been automatically extracted by the demand forecast system 1, the demand forecast system 1 (for example, demand forecast unit 24) may provide a feedback of the correction of the event forecast or the result thereof after the event to the event pre-registration DB 921. Specifically, for example, when the holding of a "concert" event scheduled to be held on September 1 has been forecast by the demand forecast system 1, the demand forecast unit 24 may compare the forecasted event effect and the scale 935 registered in the event pre-registration DB 921, and confirm whether the forecast result is adequate. If the deviation of the forecasted event effect (event effect as the forecast value) deviates (differs) considerably from the event scale, the forecasted event effect may be automatically corrected by the demand forecast unit 24, or manually corrected by the user. After the event is ended, the demand forecast unit 24 can also evaluate the error (and correct the event data based on such error) by comparing the forecast value (for example, event effect or total value) and the event scale with the actual demand, and present the result thereof to the user. Moreover, the forecast model may also be updated by using the newly accumulated actual demand data.

The foregoing explanation can be summarized, for example, as follows. Note that the following summary may include subject matter that is not included in the foregoing explanation.

A demand forecast system 1 comprises an event data creation unit 23, and a demand forecast unit 24. The event data creation unit 23 performs, for each of a plurality of targets (for example, stations), processes of creating a reference value based on actual demand data (data indicating a past time-series actual demand value), searching for one or more actual demand values in which a difference between the actual demand value and the reference value exceeds a threshold, and creating event data in which the one or more actual demand values that were found are used as the actual demand value affected by an event. The demand forecast unit 24 receives a designation of one target among the plurality of targets and a future time, and performs an event forecast of the designated target (target that was designated), which is a forecast of whether an event will occur at the designated time (future time that was designated) based on event data corresponding to the designated target and, if an event will occur, an event effect as an influence that the event will have on the actual demand value. The demand forecast unit 24 performs a demand forecast, which is a forecast of a demand at the designated time based on a result of the event forecast, and outputs (display) demand result information representing a demand that was forecasted as a result of the demand forecast. Accordingly, the actual demand value that was affected by an event is automatically extracted based on the actual demand data indicating the past time-series actual demand value. It is thereby possible to reduce the cost of the registration work for registering events. The actual demand value that was affected by an event is an actual demand value in which the difference between the actual demand data and the reference value created based thereon exceeds a threshold. As a result of forecasting the occurrence of an event in the future, higher accuracy of the demand forecast can be expected.

Note that the demand forecast system 1 (and external system 2 (for example, operation optimization system 910), and external server 3 described above) may be configured from one or more physical computers, or may be a software defined system realized by predetermined software, which is installed in each of the one or more physical computers, being executed. Moreover, the system 1 "displaying information" may be the display of such information on a display equipped in the system 1, or the system 1 sending information to be displayed to a display computer (in the case of the latter, the display computer will display the information to be displayed).

Moreover, the unit of "time" may be at least one rough unit among year, month and day, or may be a more detailed unit in which hours are added.

The demand forecast system 1 further comprises a model creation unit (for example, at least one of either a trend model creation unit 21 or a periodic model creation unit 22) which creates one or more models (for example, at least one of either a trend model or a periodic model) based on the actual demand data for each of the plurality of targets. The reference value is created, for each of the plurality of targets, by using the one or more models of the corresponding target. The event data is, for each of the plurality of targets, data including the one or more actual demand values that were found, one or more times corresponding to the one or more actual demand values, and one or more event effect forecast models as one or more forecast models of an event effect based on the one or more models. The demand forecast unit 24 performs the event forecast and the demand forecast based on the one or more models created for the designated target, and the one or more event effect forecast models in the event data corresponding to the designated target. Because the reference value is created based on one or more models obtained by modelizing the actual demand data, the efficient creation of a highly accurate reference value can be expected.

The one or more models include, for each of the plurality of targets, a trend model as a model indicating a trend of a demand fluctuation in a first time period (for example, a relatively long period), and a periodic model as a model indicating a demand fluctuation that is repeated for every second time period within the first time period. The reference value is a point, for each of the plurality of targets, created based on the trend model and the the periodic model. Because it is possible to know the trend of a demand fluctuation from a long-term perspective based on the trend model, the understanding of a periodic demand fluctuation over such long period can be expected, and consequently the efficient creation of a highly accurate reference value can be expected.

The event data, for each of the plurality of targets, includes an event data set corresponding to each event of the corresponding target. The event data set, for each event, includes at least an event effect forecast model among the event effect forecast models obtained based on at least one of event name, occurrence frequency, occurrence pattern, time of occurrence, and time period of occurrence of the relevant event, and the one or more models. Because the demand can be forecast based on the event effect forecast model in an event data set corresponding to the event forecasted to occur, a highly accurate demand forecast can be expected.

Note that the the demand result information is information related to an event in which its occurrence was forecasted in the event forecast of the designated target, and includes elements in the event data set corresponding to the relevant event. Consequently, the user's understanding of the relation of the event forecasted to occur and the forecasted demand can be expected.

Moreover, the demand forecast unit 24 receives at least one among addition, deletion and editing of elements in the event data set corresponding to the forecasted event. Consequently, the user's accurate or easy understanding of elements such as the event name and event forecast effect model can be expected.

If an event schedule data set (for example, record in an event pre-registration DB 921) related to an event schedule in which a certain time period at the designated time is a time period of occurrence has been pre-registered, the demand forecast unit 24 performs the demand forecast based on the pre-registered event schedule data set in addition to the result of the event forecast. Consequently, an even higher accurate demand forecast can be expected.

The event schedule data set includes an event scale which is represented in a same unit as the demand. For example, if the unit of demand is a headcount, then the event scale is also represented as a headcount. When the forecasted event coincides with the pre-registered event schedule, and a deviation of the forecasted event effect and the event scale exceeds a certain deviation, the event effect is corrected, for example, by the demand forecast unit 24. Consequently, an even higher accurate demand forecast can be expected.

The demand forecast system 1 is connected to an operation optimization system 910. The designated target includes a first station and a second station. The demand forecasted in the demand forecast is a number of users (for example, number of passengers) between the first station and the second station. The operation optimization system 910 optimizes at least one of either number of trains and train fare at the designated time based on the number of trains, the train fare, and the forecasted number of users. Consequently, the devisal of an optimal operation plan based on the demand forecast can be expected.

Note that the present invention is not limited to the embodiments described above, and includes various modified examples. For example, the foregoing embodiments were explained in detail for explaining the present invention in an easy-to-understand manner, and the present invention does not need to necessarily comprise all of the configurations explained in the embodiments. Moreover, a part of the configuration of a certain embodiment may be replaced with the configuration of another embodiment, and the configuration of another embodiment may be added to the configuration of one embodiment. Moreover, another configuration may be added to, deleted from or replaced with a part of the configuration of each embodiment.

Moreover, a part or all of the respective configurations, functions, processing units, and processing means described above may be realized with hardware such as an integrated circuit. Moreover, the respective configurations and functions described above may also be realized with software by a processor interpreting and executing programs that realize the respective functions. Moreover, information of programs, data and files for realizing the respective configurations and functions may be recorded in a memory, a hard disk, an SSD (Solid State Drive) or any other recording device, or may otherwise be recorded on an IC card, an SD card, a DVD or any other recording medium.

Moreover, control lines and information lines are illustrated to the extent required for the explanation, and not all control lines and information lines required for the product are not necessarily illustrated. In effect, it should be understood that all configurations are mutually connected.

Moreover, use of the foregoing event forecast in uses other than a demand forecast can be expected. For example, the following event forecast system may be configured. In other words, an event forecast system may comprise an event data creation unit and an event forecast unit. The event data creation unit may perform, for each of a plurality of targets, processes of creating a reference value based on performance data indicating a past time-series performance value, searching for one or more actual demand values in which a difference between the performance value and the reference value exceeds a threshold, and creating event data in which the one or more performance values that were found are used as the performance value affected by an event. The event forecast unit may receive a designation of one target and a future time, and perform an event forecast of the designated target, which is a forecast of whether an event will occur at the designated time based on event data corresponding to the designated target and, if an event will occur, what that event is.

### [REFERENCE SIGNS LIST]

1: demand forecast device, 21: trend model creation unit, 22: periodic model creation unit, 23: event data creation unit, 24: demand forecast unit

## Claims

1. A demand forecast system, comprising:
an event data creation unit which performs, for each of a plurality of targets, processes of creating a reference value based on actual demand data indicating a past time-series actual demand value, searching for one or more actual demand values in which a difference between the actual demand value and the reference value exceeds a threshold, and creating event data in which the one or more actual demand values that were found are used as the actual demand value affected by an event; and
a demand forecast unit which receives a designation of one target among the plurality of targets and a future time, performs an event forecast of the designated target, which is a forecast of whether an event will occur at the future time based on event data corresponding to the designated target and, if an event will occur, an event effect as an influence that the event will have on the actual demand value, performs a demand forecast, which is a forecast of a demand at the future time based on a result of the event forecast, and outputs demand result information representing a demand that has been forecasted as a result of the demand forecast.

2. The demand forecast system according to claim 1, further comprising:
a model creation unit which creates one or more models based on the actual demand data for each of the plurality of targets,
wherein the reference value is created, for each of the plurality of targets, by using the one or more models of the corresponding target,
wherein the event data is, for each of the plurality of targets, data including the one or more actual demand values that were found, one or more times corresponding to the one or more actual demand values, and one or more event effect forecast models as one or more forecast models of an event effect based on the one or more models, and wherein the demand forecast unit performs the event forecast and the demand forecast based on the one or more models created for the designated target, and the one or more event effect forecast models in the event data corresponding to the designated target.

3. The demand forecast system according to claim 2,
wherein the one or more models include, for each of the plurality of targets:
a trend model as a model indicating a trend of a demand fluctuation in a first time period; and
a periodic model as a model indicating a demand fluctuation that is repeated for every second time period within the first time period,
wherein the reference value is a point, for each of the plurality of targets, created based on the trend model and the the periodic model.

4. The demand forecast system according to claim 2,
wherein the event data, for each of the plurality of targets, includes an event data set corresponding to each event of the corresponding target, and
wherein the event data set, for each event, includes at least an event effect forecast model among the event effect forecast models obtained based on at least one of event name, occurrence frequency, occurrence pattern, time of occurrence, and time period of occurrence of the relevant event, and the one or more models.

5. The demand forecast system according to claim 4,
wherein the demand result information is information related to an event in which its occurrence was forecasted in the event forecast of the designated target, and includes elements in the event data set corresponding to the relevant event.

6. The demand forecast system according to claim 5,
wherein the demand forecast unit receives at least one among addition, deletion and editing of elements in the event data set corresponding to the forecasted event.

7. The demand forecast system according to claim 1, wherein:
the demand forecast system is connected to an operation optimization system,
the designated target includes a first station and a second station,
the demand forecasted in the demand forecast is a number of users between the first station and the second station, and
the operation optimization system is a system which optimizes at least one of either number of trains and train fare at the future time based on the number of trains, the train fare, and the forecasted number of users.

8. The demand forecast system according to claim 4,
wherein, if an event schedule data set related to an event schedule in which a certain time period at the future time is a time period of occurrence has been pre-registered, the demand forecast unit performs the demand forecast based on the pre-registered event schedule data set in addition to the result of the event forecast.

9. The demand forecast system according to claim 8,
wherein the event schedule data set includes an event scale which is represented in a same unit as the demand, and
wherein, when the forecasted event coincides with the pre-registered event schedule, and a deviation of the forecasted event effect and the event scale exceeds a certain deviation, the event effect is corrected.

10. A demand forecast method, comprising the steps of:
performing, for each of a plurality of targets, processes of creating a reference value based on actual demand data indicating a past time-series actual demand value, searching for one or more actual demand values in which a difference between the actual demand value and the reference value exceeds a threshold, and creating event data in which the one or more actual demand values that were found are used as the actual demand value affected by an event;
receiving a designation of one target among the plurality of targets and a future time; and
with regard to the designated target:
performing an event forecast of the designated target, which is a forecast of whether an event will occur at the future time based on event data corresponding to the designated target and, if an event will occur, an event effect as an influence that the event will have on the actual demand value;
performing a demand forecast, which is a forecast of a demand at the future time based on a result of the event forecast; and
outputting demand result information representing a demand that has been forecasted as a result of the demand forecast.

11. A computer program which causes a computer to execute the steps of:
performing, for each of a plurality of targets, processes of creating a reference value based on actual demand data indicating a past time-series actual demand value, searching for one or more actual demand values in which a difference between the actual demand value and the reference value exceeds a threshold, and creating event data in which the one or more actual demand values that were found are used as the actual demand value affected by an event;
receiving a designation of one target among the plurality of targets and a future time; and
with regard to the designated target:
performing an event forecast of the designated target, which is a forecast of whether an event will occur at the future time based on event data corresponding to the designated target and, if an event will occur, an event effect as an influence that the event will have on the actual demand value;
performing a demand forecast, which is a forecast of a demand at the future time based on a result of the event forecast; and
outputting demand result information representing a demand that has been forecasted as a result of the demand forecast.
